Europäisches Patentamt

European Patent Office

Office européen des brevets

(11) Veröffentlichungsnummer : **0 353 694 B1**

# (12) EUROPÄISCHE PATENTSCHRIFT

(45) Veröffentlichungstag der Patentschrift :
**20.09.95 Patentblatt 95/38**

(51) Int. Cl.⁶ : **H04L 27/34, H04L 27/00**

(21) Anmeldenummer : **89114120.2**

(22) Anmeldetag : **31.07.89**

(54) Verfahren zur redundanzsparenden, fehlerkorrigierenden Codierung in Digital-Richtfunksystemen mit mehrstufiger Modulation.

(30) Priorität : **04.08.88 DE 3826564**

(43) Veröffentlichungstag der Anmeldung :
**07.02.90 Patentblatt 90/06**

(45) Bekanntmachung des Hinweises auf die
Patenterteilung :
**20.09.95 Patentblatt 95/38**

(84) Benannte Vertragsstaaten :
**AT BE CH DE FR GB IT LI NL SE**

(56) Entgegenhaltungen :
**US-A- 4 346 473
AT & T TECHNICAL JOURNAL.Bd. 64, Nr. 7,
September 1985, New York,US;Seiten 1625 -
1637;M.KAVEHRAD: "Convolutional Coding
for High-Speed Microwave Radio Communications"**

(56) Entgegenhaltungen :
**IEEE TRANSACTIONS ON INFORMATION
THEORY. Bd. IT-19, Nr. 3, Mai 1973, NEW
YORK US Seiten 336 - 340; MECKLENBURG P.
et al.: 'Correction of Errors in Multilevel Gra-
y-Coded Data'
EUROPEAN CONFERENCE ON RADIO-RELAY
SYSTEMS (ECCR) November 1986, MU-
¨NCHEN,DE Seiten 166 - 172; BELLINI S. et al.:
'Coding for Error Correction in High Capacity
Digital Radio: An Application to 64-QAM Systems'**

(73) Patentinhaber : **SIEMENS
AKTIENGESELLSCHAFT
Wittelsbacherplatz 2
D-80333 München (DE)**

(72) Erfinder : **Friederichs, Karl-Josef, Dr.-Ing.
Blütenstrasse 65 A
D-8039 Puchheim (DE)**
Erfinder : **Ringelhaan, Otmar, Dipl.-Ing.
Mauthäuslstrasse 39
D-8000 München 70 (DE)**

EP 0 353 694 B1

## Beschreibung

Die Erfindung bezieht sich auf ein Verfahren zur redundanzsparenden, fehlerkorrigierenden Codierung in Digital-Richtfunksystemen mit mehrstufiger Modulation mittels Vorwärtsfehlerkorrektur, bei dem das jeweils niederwertigste Bit von I- und Q-Kanal codiert und über einen Multiplexer dem Modulator zugeführt wird und die höherwertigen Bits von I- und Q-KanaL direkt die zugehörigen Eingänge des Modulators steuern, und in einer Decodiereinrichtung mögliche Übertragungsfehler korrigiert werden. Ein solches Verfahren ist aus der US-PS 4 346 473 bekannt.

In Digital-Richtfunksystemen wird entsprechend der Forderung nach einer effizienten Spektrumsausnutzung in der Regel die M-äre Quadraturamplitudenmodulation (M-QAM) eingesetzt. Hierbei geht der Entwicklungstrend zu immer größeren Stufenzahlen, z. B. M=64 oder 256. Systeme mit derartig hoher Stufenzahl sind allerdings wesentlich empfindlicher gegen Störeinflüsse aller Art, wie z. B. Rauschen, Nachbarkanalstörungen und Signalverzerrungen als Systeme mit niedriger Stufenzahl. Die Störanfälligkeit von Digital-Richtfunksystemen kann im allgemeinen jedoch durch eine fehlerkorrigierende Codierung verringert werden. Hierbei kommen prinzipell nur Verfahren mit Vorwärtsfehlerkorrektur (FEC=Forward Error Correction) in Frage, da die Datenrate fest vorgegeben ist. Zur Aufnahme der für die FEC erforderlichen Redundanz ist eine Erhöhung der Übertragungsrate aus Gründen der stark begrenzten Bandbreite nur bis etwa 3% vertretbar. Diese starke Einschränkung erfordert den Einsatz von FEC-Verfahren, die in optimaler Weise an die Eigenschaften des Übertragungskanals angepaßt sind, so daß eine effektive Ausnutzung der nur geringen Redundanz erzielt wird.

Die Anwendung einiger gängiger FEC-Verfahren in 64-QAM-Richtfunksystemen ist in folgenden Literaturstellen beschrieben:

M. Kavehrad, "Convolutional Coding for High-Speed Microwave Radio Communications", AT&T Technical Journal, Vol. 64, No. 7, Sept. 1985, S. 1625 - 1637; S. Bellini et al., "Coding for Error Correction in High Capacity Digital Radio: An Application to 64 QAM Systems", European Conference on Radio-Relay Systems (ECRR), München, Nov. 1986, S. 166 - 172 und T. Noguchi et al., "6 GHz 135 MBPS Digital Radio System with 64 QAM Modulation", International Conference on Communications (ICC), Boston, June 19 - 22, 1983, Vol. 3, S. 1472 - 1477.

In diesen Beispielen werden ein selbstorthogonaler Faltungscode (CSOC=Convolutional Self-Orthogonal Code), ein Reed-Solomon Code bzw. ein Blockcode mit Lee-Metrik zur Fehlerkorrektur eingesetzt. Wesentliche Nachteile dieser Verfahren sind, daß sie eine relativ hohe Redundanz verwenden, die Redundanz nur ungenügend zur Fehlerkorrektur ausnutzen und/oder einen erheblichen Systemaufwand erfordern.

In der Literaturstelle von G. Ungerböck, "Trellis-Coded Modulation with Redundant Signal Sets", Parts I and II, IEEE Communications Magazine, Vol. 25, No. 2, Feb. 1987, S. 5 - 21 ist ein effizientes FEC-Verfahren beschrieben, bei dem die Redundanz durch eine Verdopplung der Stufenzahl aufgenommen wird und bei dem deshalb keinerlei Erhöhung der Übertragungsrate erforderlich ist. Dieses Verfahren erfordert allerdings den Einsatz eines aufwendigen Viterbi-Decoders. Zudem wird es bei hoher Stufenzahl durch eine weitere Verdopplung derselben anfällig gegen unvermeidbare Systemimperfektionen wie beispielsweise eine nicht ideale Trägerrückgewinnung.

Ein redundanzsparendes FEC-Verfahren, welches für QAM-Systeme mit Graycodierung anwendbar ist, wird in der Literaturstelle von P. Mecklenburg et al., "Correction of Errors in Multilevel Gray-Coded Data", IEEE Trans. Inf. Theory, Vol. IT-19, No. 3, May 1973, 336 - 340 vorgestellt. Hierbei werden die n Bits eines jeden zu sendenden Symbols durch Exclusiv-Oder-Verknüpfungen zunächst auf $i<n$ Bits komprimiert. Schließlich werden nur diese i Bits als Repräsentanten der Sendesymbole in eine sogenannte unterlegte Codierung einbezogen. Für Richtfunksysteme mit hoher Stufenzahl hat das Verfahren den Vorteil, daß die gesamte Systemredundanz auf Grund der Kompression deutlich geringer ist als die effektive Redundanz des unterlegten Codes, und zwar um so ausgeprägter, je höher die Stufenzahl ist. Nachteilig ist, daß das Verfahren auf eine Graycodierung der Symbolpunkte in der Modulationsebene angewiesen ist. Es kann daher nicht in Systemen eingesetzt werden, die z. B. zur Eliminierung der Quadrantenmehrdeutigkeiten eine Differenzcodierung benötigen, oder die ein nicht graycodierbares (z. B. hexagonales) Modulationsschema verwenden.

Der Erfindung liegt die Aufgabe zugrunde, ein redundanzsparendes FEC-Verfahren zu schaffen, das in vielfältigen Systemen einsetzbar ist.

Diese Aufgabe wird gemäß der Erfindung in der Weise gelöst, daß der zu übertragende serielle binäre Datenstrom einer Einrichtung zur Ratenanpassung und Serien/Parallel-Wandlung zugeführt wird, in der zum einen die Datenrate auf die Übertragungsrate erhöht wird unter Bildung freier Plätze zur Aufnahme von Redundanzbits und zum anderen aus dem seriellen Datenstrom eine entsprechende Anzahl paralleler, jeweils zur Hälfte den I- bzw. den Q-Kanal bildender Datenströme erzeugt wird, daß das jeweils niederwertigste Bit von I- und Q-Kanal, in denen die Redundanzplätze liegen, zum einen direkt und zum anderen über einen Coder den beiden Eingängen des Multiplexers zugeführt wird, der ausgangsseitig mit Quadraturmodulator verbunden ist, und daß die Coder, die jeweils eine bestimmte Anzahl von k einlaufenden Bits betrachten und daraus gemäß der Codiervorschrift eines unterlegten Codes ein oder mehrere Redundanzbits erzeugen, die mit Hilfe der Multiplexer an den hierfür vorgesehenen Stellen im I-bzw. Q-Kanal eingefügt werden, die Struktur eines modifizierten selbstorthogonalen Faltungscodes hoher Rate m/n (z.B. $R_C$=8/9) aufweisen, bei denen die einlaufenden seriellen Datenbits (niederwertigste Bits) in eine entsprechende Anzahl binärer Datenströme gewandelt werden, von denen jeder einem binären digitalen FIR-Filter (FIR = Finite Impulse Response) zugeführt wird, deren Übertragungsfunktionen mit den Generatorpolynomen des verwendeten Codes identisch sind und deren Ausgänge über einen Modulo-2 Addierer miteinander verknüpft sind, und daß die in diesem entstehenden Prüfbits einem binären digitalen IIR-Filter (IIR = Infinite Impulse Response) zugeführt werden, dessen Übertragungsfunktionen $H_n(D) = 1/G_n(D)$ (z.B. n=9) lautet, wobei $G_n$ (D) ein Generatorpolynom ist.

Das erfindungsgemäße Verfahren hat, ausgehend von dem Verfahren nach Mecklenburg, diesem gegenüber den Vorteil, daß es keine Graycodierung erfordert und für quasi jedes beliebige Modulationsschema anwendbar ist.

Vorteilhafte Ausgestaltungen und Weiterbildungen des Erfindungsgegenstandes sind in den Unteransprüchen angegeben.

Nachstehend wird die Erfindung anhand eines in der Zeichnung dargestellten Ausführungsbeispiels näher erläutert.

Es zeigen

Fig. 1     die Struktur der Codiereinrichtung für ein 256-QAM System,

Fig. 2     die Struktur einer Decodiereinrichtung für die Anwendung der unterlegten Codierung in einem 256-QAM System,

Fig. 3     die Coderstruktur eines modifizierten CSOC der Rate $R_C$=8/9 und

Fig. 4     die Struktur des Decoders für den modifizierten CSOC der Rate $R_C$=8/9.

Für die Beschreibung der Erfindung wird im folgenden zunächst die Funktionsweise der unterlegten Codierung am Beispiel eines 256-QAM-Systems erläutert. Nichtsdestoweniger kann sie auch für andere mehrstufige Modulationsarten eingesetzt werden.

Die Funktion der unterlegten Codierung beruht auf der Tatsache, daß die meisten Übertragungsfehler, die in Übertragungssystemen mit mehrstufiger Modulation auftreten, Verfälschungen in Nachbarsymbolen sind (sog. Einstufenfehler). Die Wahrscheinlichkeit, daß ein übertragenes Symbol über eine oder gar mehrere Symbolstufen hinweg verfälscht wird, ist in der Regel um etliche Zehnerpotenzen geringer als die Wahrscheinlichkeit einer Verfälschung in ein benachbartes Symbol. Die unterlegte Codierung zielt nun darauf ab, ausschließlich Einstufenfehler zu korrigieren. Hierzu ist es nicht erforderlich, alle übertragenen Datenbits in den fehlerkorrigierenden Code einzubeziehen, sondern es genügt, wenn lediglich das Bit mit der geringsten Wertigkeit (LSB=Least Significant Bit) eines jeden Symbols aus den I- bzw. Q-Kanal codiert wird.

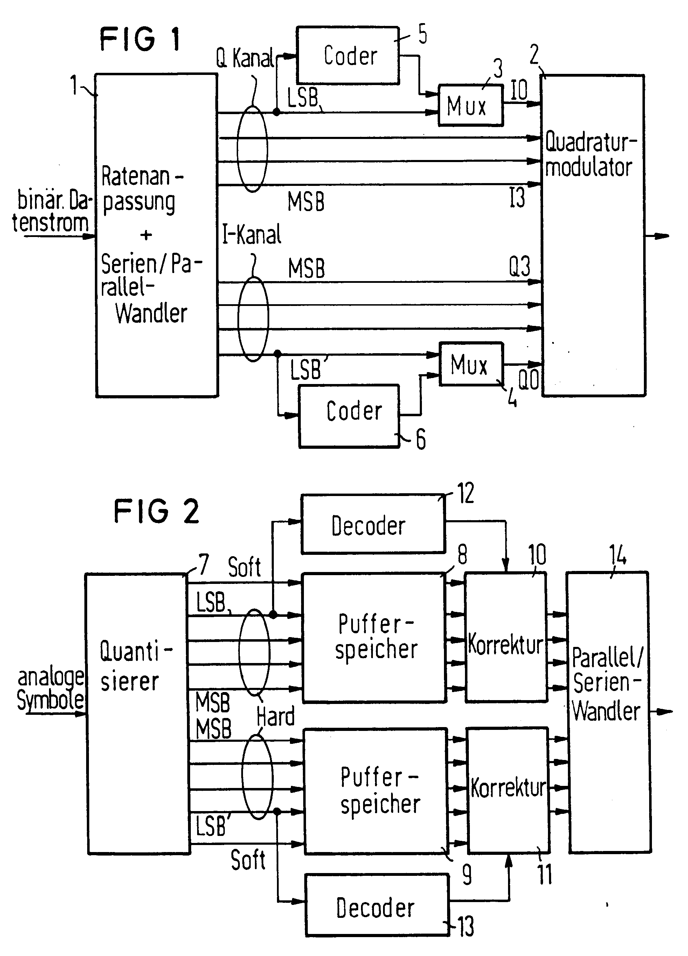

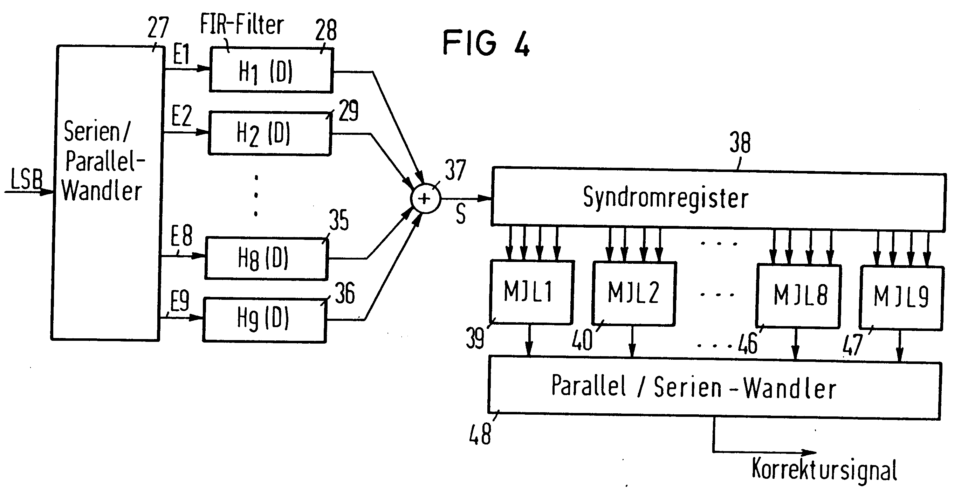

In Fig. 1 ist die Struktur der Codiereinrichtung für ein 256-QAM System dargestellt. Dabei wird der zu übertragende serielle binäre Datenstrom zunächst einer Einrichtung 1 zur Ratenanpassung und Serien/Parallel-Wandlung zugeführt. In dieser wird zum einen die Datenrate auf die Übertragungsrate erhöht, so daß freie Plätze zur Aufnahme der Redundanzbits entstehen, zum anderen werden aus dem seriellen Datenstrom acht parallele Datenströme erzeugt. Von diesen acht Datenströmen bilden vier den I- und die übrigen vier den Q-Kanal. Die Ratenanpassung ist so ausgelegt, daß die Redundanzplätze stets in den niederwertigsten Bits (LSB) von I- und Q-Kanal liegen. Die drei höherwertigen Bits von I-und Q-Kanal steuern direkt die zugehörigen Eingänge eines Quadraturmodulators 2, während das LSB dem betreffenden Eingang des Quadraturmodulators 2 jeweils über einen Multiplexer 3 bzw. 4 zugeführt wird. Zusätzlich wird das LSB von I- und Q-Kanal jeweils einem Coder 5 bzw. 6 zugeführt. Jeder der beiden Coder 5,6 betrachtet eine bestimmte Anzahl von k einlaufenden Bits und generiert hieraus gemäß der Codiervorschrift eines an späterer Stelle näher spezifizierten unterlegten Codes ein oder mehrere Redundanzbits. Letztere werden mit Hilfe der beiden Multiplexer 3,4 an den hierfür vorgesehenen Stellen im I- bzw. Q-Kanal eingefügt.

Das beschriebene Verfahren der unterlegten Codierung bewirkt, daß die Gesamtrate $R_G$ des Systems deutlich größer ist als die Rate $R_C$ des unterlegten Codes. Allgemein gilt für ein M-QAM-System, bei dem nur das LSB von I- und Q-Kanal in die Codierung einbezogen wird, der Zusammenhang

$$\frac{1 - R_C}{1 - R_G} = 1d\sqrt{M}.$$

Für ein 256-QAM-System berechnet sich mit dieser Gleichung beispielsweise aus einer Coderate von $R_C$=8/9 ($\triangleq$ 12,5% Coderedundanz) die Gesamtrate $R_C$=35/36 ($\triangleq$ 2,8% Systemredundanz). Eine nur geringe Systemredundanz wird daher in eine größere effektive Coderedundanz transformiert.

Die Funktionsweise des Decodierverfahrens wird anhand von Fig. 2 erläutert, die die Struktur einer Decodiereinrichtung für die Anwendung der unterlegten Codierung in einem 256-QAM-System darstellt. Die empfangenen analogen Symbolwerte werden zunächst in einer Quantisiereinrichtung 7, beispielsweise einem Analog/Digital-Wandler, in digitale Datenworte (Symbole) quantisiert. Hierbei muß die Auflösung der Quantisierung so fein sein, daß jeweils für I- und Q-Kanal neben den vier Hard-Decision-Bits, welche der Auflösung der Sendesymbole entsprechen, mindestens ein Soft-Decision-Bit zur Verfügung steht. In der Praxis bedeutet dies im allgemeinen jedoch keine Einschränkung, da beispielsweise zur Trägerrückgewinnung oder zur Steuerung von Entzerrereinrichtungen sowieso mehrere Soft-Decision-Bits benötigt werden. Die digitalen Symbole von I- und Q-Kanal werden jeweils in einem Pufferspeicher 8 bzw. 9 verzögert und einer nachfolgenden Korrektureinrichtung 10 bzw. 11 zugeführt, deren Ausgänge mit einem Parallel/Serien-Wandler 14 verbunden sind. Weiterhin wird gemäß dem Konzept der unterlegten Codierung jeweils das LSB der Hard-Decision-Bits einem Decoder 12 bzw. 13 zugeführt, dessen Ausgang mit der jeweiligen Korrektureinrichtung 10 bzw. 11 verbunden ist. Wenn auf dem Übertragungsweg ein einstufiger Symbolfehler auftritt, so wird hierdurch in jedem Fall das zugehörige LSB verfälscht. Der Decoder analysiert nun entsprechend der Decodiervorschrift des unterlegten Codes eine Folge von aufeinanderfolgenden LSBs. Sofern seine Korrekturkapazität nicht überschritten ist, erkennt er das verfälschte LSB und gibt an seinem Ausgang einen Korrekturimpuls ab, wenn das zugehörige Symbol am Eingang der Korrektureinrichtung anliegt. Unter der Voraussetzung, daß der Übertragungsfehler einstufig war, kann die Korrektureinrichtung 10 bzw. 11 den Fehler korrigieren, indem sie zu dem binären Symbolwert entweder +1 oder -1 addiert. Die Entscheidung darüber, ob +1 oder -1 addiert wird, kann anhand des Soft-Decision-Bits gefällt werden.

Für den unterlegten Code, anhand dessen der Coder (siehe Fig.1) die Redundanzbits erzeugt und der Decoder (siehe Fig .2) die Übertragungsfehler decodiert, können prinzipiell beliebige Block- oder Faltungscodes in Frage kommen. Im vorliegenden Fall ist jedoch die Anwendung eines selbstorthogonalen Faltungscodes (CSOC) von besonderem Interesse. Der Grund hierfür ist, daß CSOCs nur einen relativ geringen Codier- und Decodieraufwand erfordern. Im Hinblick auf die schnelle Signalverarbeitung ist dies besonders in der Richtfunktechnik von Bedeutung. Über die Theorie und Praxis von CSOCs existiert bereits ein umfangreiches Schrifttum, beispielsweise der eingangs zitierte Aufsatz von H. Kavehrad oder das Buch "Error-Correction Coding for Digital Communications" von G.C. Clark, Jr.; J.B. Cain, erschienen in Plenum Press, New York, 1982. Eine detaillierte Beschreibung der Funktionsweise erübrigt sich somit.

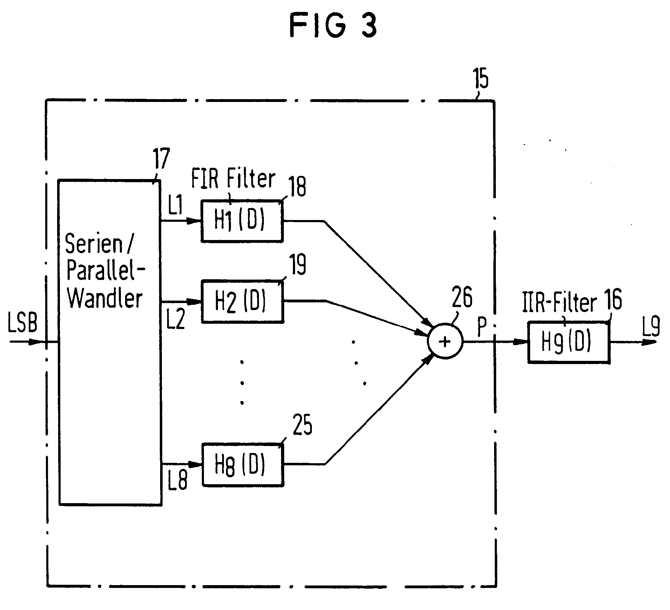

Im Zusammenhang mit dem Konzept der unterlegten Codierung sind die bekannten Codier- und Decodierverfahren von CSOCs jedoch nicht unmittelbar anwendbar. Diese Verfahren sehen nämlich nicht vor, daß neben den übertragenen Datenbits auch die übertragenen Prüfbits korrigiert werden können. Im vorliegendne Fall sind aber auch die Prüfbits Bestandteil von Datensymbolen und sollten ebenfalls korrigierbar sein. Deshalb muß der verwendete CSOC modifiziert werden. Diese in der erfindungsgemäßen Weise vorgenommenen Modifikationen werden nachfolgend anhand der Figuren 3 und 4 beschrieben. Diese zeigen die Strukturen von Coder und Decoder für einen unterlegten modifizierten CSOC der Rate $R_C=8/9$.

Bei der in Fig. 3 dargestellten Coderstruktur eines modifizierten CSOC beinhaltet der gestrichelt umrahmte Teil 15 einen konventionellen Coder eines CSOC. Die Modifikation betrifft den zusätzlichen Teil 16 außerhalb des gestrichelten Rahmens. Im folgenden soll die Funktionsweise des Coders kurz erläutert werden: Die einlaufenden seriellen Datenbits (LSB) werden zunächst in einem Serien/Parallel-Wandler 17 in acht parallele binäre Datenströme L1 bis L8 gewandelt. Jeder dieser acht Datenströme wird einem binären digitalen FIR-Filter 18 bis 25 (FIR=Finite Impulse Response) zugeführt. Die Übertragungsfunktionen $H_i(D)$ der FIR-Filter 18 bis 25 sind mit den Generatorpolynomen $G_i(D)$, i=1,2,...,8 des verwendeten Codes identisch, d. h. es gilt

$$H_i(D) \;=\; G_i(D), \; i \;=\; 1,2,\ldots,8.$$

Bezüglich der Definition der Generatorpolynome eines CSOC kann ebenfalls auf die einschlägige Literatur verwiesen werden, beispielsweise das vorstehend genannte Buch von Clark und Cain. Die Ausgänge der FIR-Filter 18 bis 25 werden über einen Modulo-2-Addierer 26 miteinander verknüpft. Die entstehenden Prüfbits P werden nun gemäß der Erfindung einem binären digitalen IIR-Filter 16 (IIR=Infinite Impulse Response) zugeführt, also dem außerhalb des strichlierten Rahmens 15 liegenden Teil der Coderstruktur. Die Übertragungsfunktion dieses Filters lautet

$$H_9(D) \;=\; 1/G_9(D),$$

wobei $G_9(D)$ ein weiteres Generatorpolynom ist. Der modifizierte Code verwendet also nicht nur acht, sondern insgesamt neun Generatorpolynome. Ein Filter mit der vorstehenden Übertragungsfunktion ist in Form eines rückgekoppelten Schieberegisters realisierbar. Die acht FIR-Filter 18 bis 25 und das IIR-Filter 16 müssen in der praktischen Ausführung nicht alle getrennt aufgebaut werden, sondern können entsprechend der Theorie digitaler Filter zu einem einzigen angezapften, rückgekoppelten Schieberegister zusammengefaßt werden. Die in Fig. 3 gewählte Einzeldarstellung dient lediglich zum besseren Verständnis der Funktionsweise.

Bei dem in Fig. 4 gezeigten Decoder werden die empfangenen, seriell einlaufenden Bits (LSB) in einem Serien/Parallel-Wandler 27 in neun parallele Bitströme E1 bis E9 gewandelt. Diese parallelen Bitströme entsprechen den acht Datenströmen L1 bis L8 sowie dem Prüfbitstrom L9 im Coder (vgl. Fig. 3). Jeder der neun Bitströme E1 bis E9 wird einem binären digitalen FIR-Filter 28 bis 36 zugeführt. Die Übertragungsfunktionen $H_i(D)$ dieser Filter sind identisch mit den Generatorpolynomen des Codes, d. h.

$$H_i(D) = G_i(D), i = 1,2,\dots ,9.$$

Im Gegensatz zu einem konventionellen Decoder wird in vorliegendem Fall gemäß der Erfindung auch der empfangene Prüfbitstrom E9 mit einem FIR-Filter gefiltert. Selbstverständlich können auch im Decoder die neun parallelen FIR-Filter in der praktischen Ausführung zu einem Schieberegister mit entsprechenden Anzapfungen zusammengefaßt werden. Die Filterausgangssignale werden über einen Modulo-2-Addierer 37 zu einem sogenannten Syndrom S zusammengefaßt, welches dann in ein Syndromregister 38 eingeleitet wird. Das Syndromregister 38 enthält entsprechend dem Generatorpolynomen insgesammt 4x9=36 Anzapfungen. Jeweils vier Anzapfungen, die einem Generatorpolynom entsprechen, werden einer Majoritätslogik 39 bis 47 zugeführt. Eine Majoritätslogik ist eine Schaltung, die an ihrem Ausgang den logischen Wert 1 abgibt, wenn eine Mehrheit der Eingangssignale (hier also mindestens drei) den logischen Wert 1 annimmt. In Erweiterung zu einem konventionellen Decoder und entsprechend den neun FIR-Filtern 28 bis 36 werden im vorliegenden Fall ebenfalls neun anstelle von nur acht Majoritätslogiken verwendet. Diese Majoritätslogiken realisieren zusammen mit den entsprechenden Anzapfungen sogenannte angepaßte Filter für die zugehörigen Generatorpolynome. Die Ausgangssignale der Majoritätslogiken werden schließlich mit Hilfe eines Parallel/Serien-Wandlers 48 zu einem Ausgangssignal zusammengefaßt. Dieses stellt das Korrektursignal dar.

Das vorstehend beschriebene Konzept der unterlegten Codierung ist nicht auf die Korrektur von einstufigen Symbolfehlern beschränkt. Durch die Einbeziehung von zwei Bits pro Symbol in den unterlegten Code können auch alle möglichen ein- und zweistufigen Symbolfehler korrigiert werden, und durch Einbeziehung von drei Bit pro Symbol könnten alle möglichen ein- bis vierstufigen Symbolfehler korrigiert werden. Eine weitere Verbesserung der Leistungsfähigkeit des Decoders kann erzielt werden, indem man neben dem Hard-Decision-LSB noch weitere Soft-Decision-Bits zur Detektion der Übertragungsfehler ausnutzt.

## Patentansprüche

1.  Verfahren zur redundanzsparenden, fehlerkorrigierenden Codierung in Digital-Richtfunsystemen mit mehrstufiger Modulation mittels Vorwärtsfehlerkorrektur, bei dem das jeweils niederwertigste Bit von I- und Q- Kanal codiert und über einen Multiplexer (3, 4) dem Modulator (2) zugeführt wird und die höherwertigen Bits von I- und Q- Kanal direkt die zugehörigen Eingänge des Modulators (2) steuern und in einer Decodiereinrichtung mögliche Übertragungsfehler korrigiert werden,
    **dadurch gekennzeichnet,**
    daß der zu übertragende serielle binäre Datenstrom einer Einrichtung (1) zur Ratenanpassung und Serien/Parallel-Wandlung zugeführt wird, in der zum einen die Datenrate auf die Übertragungsrate erhöht wird unter Bildung freier Plätze zur Aufnahme von Redundanzbits und zum anderen aus dem seriellen Datenstrom eine entsprechende Anzahl paralleler, jeweils zur Hälfte den I- bzw. den Q-Kanal bildende Datenströme erzeugt wird, daß das jeweils niederwertigste Bit von I- und Q-Kanal, in denen die Redundanzplätze liegen, zum einen direkt und zum anderen über einen Coder (5, 6) den beiden Eingängen des Multiplexers (3, 4) zugeführt wird, der ausgangsseitig mit dem Quadraturmodulator (2) verbunden ist, und daß die Coder (5, 6), die jeweils eine bestimmte Anzahl von k einlaufenden Bits betrachten und daraus gemäß der Codiervorschrift eines unterlegten Codes ein oder mehrere Redundanzbits erzeugen, die mit Hilfe der Multiplexer (3, 4) an den hierfür vorgesehenen Stellen im I- bzw. Q-Kanal eingefügt werden, die Struktur eines modifizierten selbstorthogonalen Faltungscodes hoher Rate m/n (z.B. $R_C$=8/9) aufweisen, bei denen die einlaufenden seriellen Datenbits (niederwertigste Bits) in eine entsprechende Anzahl binärer Datenströme gewandelt werden, von denen jeder einem binären digitalen FIR-Filter (18 - 25) (FIR = Finite Impulse Response) zugeführt wird, deren Übertragungsfunktionen $H_i(D)$ mit den Generatorpolynomen $G_i(D)$ (i = 1, 2, ..., m) (z.B. m=8) des verwendeten Codes identisch sind und deren Ausgänge über einen Modulo-2 Addierer (26) miteinander verknüpft sind, und daß die in diesem entstehenden Prüfbits einem binären digitalen IIR-Filter (16) (IIR = Infinite Impulse Response) zugeführt werden, dessen Übertragungsfunktion $H_n(D) = 1/G_n(D)$ (z.B. n=9) lautet, wobei $G_n(D)$ ein Generatorpolynom ist.

2.  Verfahren nach Anspruch 1,
    **dadurch gekennzeichnet,**
    daß in der Decodiereinrichtung die empfangenen analogen Symbolwerte zunächst in einer Quantisiereinrichtung (7) in digitale Datenworte (Symbole) quantisiert werden mit einer solchen feinen Auflösung der Quantisierung, daß jeweils für I- und Q-Kanal neben den Hard-Decision-Bits (niederwertigste Bits und höherwertige Bits) mindestens ein Soft-Decision-Bit zur Verfügung steht, daß die digitalen Symbole von

5

I- und Q-Kanals jeweils in einem Pufferspeicher (8, 9) verzögert und einer Korrektureinrichtung (10, 11) zugeführt werden und das niederwertigste Bit der Hard-Decision-Bits zusätzlich jeweils einem ausgangsseitig mit der Korrektrureinrichtung verbundenen Decoder (12, 13) zugeführt wird, der entsprechend der Decodiervorschrift des unterlegten Codes eine Folge von aufeinanderfolgenden niederwertigsten Bits analysiert und bei Erkennung eines verfälschten niederwertigsten Bits an seinem Ausgang einen Korrekturimpuls an die Korrektureinrichtung (10, 11) abgibt, die dann eine Korrektur des Übertragungsfehlers vornimmt.

3. Verfahren nach Anspruch 1 oder 2,
**dadurch gekennzeichnet,**
daß sowohl die Symbole korrigierbar sind, deren niederwertigstes Bit ein Datenbit ist, als auch, als Folge der in den Codern (5, 6) eingesetzten IIR-Filter die Symbole, deren niederwertigstes Bit ein durch die Multiplexer (3, 4) eingesetztes Prüfbit des selbstorthogonalen Faltungscodes ist.

4. Verfahren nach einem der Ansprüche 1 bis 3,
**dadurch gekennzeichnet,**
daß das IIR-Filter (16) in Form eines rückgekoppelten Schieberegisters realisiert ist.

5. Verfahren nach einem der Ansprüche 1 bis 3,
**dadurch gekennzeichnet,**
daß die FIR- und das IIR-Filter (18-25; 16) zu einem einzigen angezapften, rückgekoppelten Schieberegister zusammengefaßt sind.

6. Verfahren nach einem der Ansprüche 1 bis 3,
**dadurch gekennzeichnet,**
daß der Decoder (12, 13) die Struktur eines modifizierten selbstorthogonalen Faltungscodes hoher Rate m/n (z.B. $R_C = 8/9$) aufweist, bei dem die seriell einlaufenden Bits (niederwertigste Bits) in parallele Bitströme gewandelt werden, die der Anzahl der Datenströme sowie dem Prüfbitstrom im Coder (5, 6) entsprechen, daß jeder dieser Bitströme einem binären digitalen FIR-Filter (28 - 36) zugeführt wird, deren Übertragungsfunktionen $H_i(D)$ identisch sind mit den Generatorpolynomen $G_i(D)$ des Codes, wobei auch der empfangene Prüfbitstrom mit einem FIR-Filter gefiltert wird, daß die Filterausgangssignale über einen Modulo-2-Addierer (37) zu einem Syndrom zusammengefaßt werden, das in ein Syndromregister (38) eingeleitet wird, welches Anzapfungen entsprechend den Generatorpolynomen enthält, daß jeweils eine Anzahl von Anzapfungen, die einem Generatorpolynom entsprechen, einer Majoritätslogik (39 - 47) zugeführt werden, deren Anzahl der der FIR-Filter (28 - 36) entspricht und die zsammen mit den entsprechenden Anzapfungen angepaßte Filter für die zugehörigen Generatorpolynome realisieren, und daß die Ausgangssignale der Majoritätslogiken (39 - 47) mit Hilfe eines Parallel/Serien-Wandlers (48) zu einem Ausgangssignal als Korrektursignal zusammengefaßt werden.

7. Verfahren nach Anspruch 1,
**dadurch gekennzeichnet,**
daß die parallelen FIR-Filter zu einem Schieberegister mit entsprechenden Anzapfungen zusammengefaßt sind.

8. Verfahren nach Anspruch 2, 6 oder 7,
**dadurch gekennzeichnet,**
daß dem Decoder (12, 13) neben dem niederwertigsten Hard-Decision-Bit auch ein oder mehrere Soft-Decision-Bits zugeführt werden, und daß im Decoder (12, 13) anstelle der Majoritätslogiken (39 - 47) sogenannte Schwellenlogiken eingesetzt werden, welche auch die Soft-Decision-Information zur Decodierung der Übertragungsfehler ausnutzen.

9. Verfahren nach einem der vorhergehenden Ansprüche,
**dadurch gekennzeichnet,**
daß zusätzlich zu dem niederwertigsten Hard-Decision-Bit ein oder zwei höherwertige Hard-Decision-Bits in die Codierung und Decodierung einbezogen werden.

## Claims

1. Method for redundancy-reducing error-correcting coding in digital radio relay systems with multi-level modulation using forward error correction, in which the respective least significant bit of the I-channel and the Q-channel is coded and supplied to the modulator (2) via a multiplexer (3, 4), and the more significant bits of the I-channel and the Q-channel directly control the associated inputs of the modulator (2) and any transmission errors are corrected in a decoding means, characterized in that the serial binary data stream to be transmitted is supplied to a means (1) for rate-matching and serial/parallel conversion, in which firstly the data rate is increased to the transmission rate with formation of free locations for accommodating redundancy bits, and secondly a corresponding number of parallel data streams, half forming the I-channel and half forming the Q-channel in each case, is generated from the serial data stream, in that the respective least significant bit of the I-channel and the Q-channel, in which the redundancy locations are situated, is supplied on the one hand directly and on the other hand via a coder (5, 6) to the two inputs of the multiplexer (3, 4), which is connected on the output side to the quadrature modulator (2), and in that the coders (5, 6), which observe in each case a specific number of k incoming bits and generate one or more redundancy bits therefrom in accordance with the coding rules of an underlying code, which bits are inserted with the aid of the multiplexers (3, 4) at the locations in the I-channel and Q-channel respectively provided for this purpose, have the structure of a modified convolutional self-orthogonal code having a high rate m/n (for example $R_c$=8/9), in which the incoming serial data bits (least significant bits) are converted into a corresponding number of binary data streams, each one of which is supplied to a binary digital FIR filter (18 - 25) (FIR = Finite Impulse Response), the transfer functions $H_i(D)$ of which are identical to the generator polynomials $G_i(D)$ (i = 1, 2, ..., m) (for example m=8) of the code used, and the outputs of which are combined with one another using a modulo-2 adder (26), and in that the check bits resulting in the latter are supplied to a binary digital IIR filter (16) (IIR = Infinite Impulse Response), the transfer function of which is $H_n(D) = 1/G_n(D)$ (for example n=9), where $G_n(D)$ is a generator polynomial.

2. Method according to Claim 1, characterized in that in the decoding means, first of all the received analog symbol values are quantized in a quantisation means (7) into digital data words (symbols) with such a fine quantisation resolution that at least one soft decision bit is available in each case for the I-channel and the Q-channel in addition to the hard decision bits (least significant bits and more significant bits), in that the digital symbols of the I-channel and the Q-channel are delayed in a buffer memory (8, 9) in each case and are supplied to a correction means (10, 11), and the least significant bit of the hard decision bits is additionally supplied to a decoder (12, 13) connected on the output side to the correction means in each case, which decoder analyses a series of successive least significant bits in accordance with the decoding rules of the underlying code and, if a falsified least significant bit is detected, outputs at its output a correction pulse to the correction means (10, 11), which then corrects the transmission error.

3. Method according to Claim 1 or 2, characterized in that it is possible to correct both the symbols whose least significant bit is a data bit and, owing to the IIR filters employed in the coders (5, 6), the symbols whose least significant bit is a check bit of the convolutional self-orthogonal code used by the multiplexers (3, 4).

4. Method according to one of Claims 1 to 3, characterized in that the IIR filter (16) is realised in the form of a feedback shift register.

5. Method according to one of Claims 1 to 3, characterized in that the FIR filters and the IIR filter (18-25; 16) are combined to form a single tapped feedback shift register.

6. Method according to one of Claims 1 to 3, characterized in that the decoder (12, 13) has the structure of a modified convolutional self-orthogonal code having a high rate m/n (for example $R_c$=8/9), in which the incoming serial bits (least significant bits) are converted into parallel bit streams corresponding to the number of data streams and also to the check bit stream in the coder (5, 6), in that each one of said bit streams is supplied to a binary digital FIR filter (28 - 36), the transfer functions of which $H_i(D)$ are identical to the generator polynomials $G_i(D)$ of the code, in which the received check bit stream is also filtered using a FIR filter, in that the filter output signals are combined using a modulo-2 adder (37) to form a syndrome which is introduced into a syndrome register (38) containing taps corresponding to the generator polynomials, in that in each case a number of taps corresponding to a generator polynomial is supplied to a majority logic unit (39 - 47), the number of which corresponds to that of the FIR filters (28 - 36), and which realize adaptive filters for the associated generator polynomials together with the corresponding taps, and in that the output signals of the majority logic units (39 - 47) are combined with the aid of a parallel/serial converter (48) to form an output signal as correction signal.

7. Method according to Claim 1, characterized in that the parallel FIR filters are combined to form a shift register with corresponding taps.

8. Method according to Claim 2, 6 or 7, characterized in that, in addition to the least significant hard decision bit, one or more soft decision bits are also supplied to the decoder (12, 13), and in that so-called threshold logic units are employed in the decoder (12, 13) instead of the majority logic units (39 - 47), which threshold logic units also utilize the soft decision information to decode the transmission errors.

9. Method according to one of the preceding claims, characterized in that, in addition to the least significant hard decision bit, one or two more significant hard decision bits are included in the coding and decoding.


**Revendications**

1. Procédé pour le codage avec économie de redondance et correction d'erreurs dans des systèmes hertziens numériques avec une modulation à plusieurs niveaux au moyen d'une correction d'erreurs amont, selon lequel on code respectivement le bit de poids le plus faible du canal I et du canal Q et on l'envoie, par l'intermédiaire d'un multiplexeur (3,4), au modulateur (2), et les bits de poids supérieur des canaux I et Q commandent directement les entrées associées du modulateur (2), et des éventuelles erreurs de transmission sont corrigées dans un dispositif de décodage,
caractérisé par le fait que le flux de données binaires en série, qui doit être transmis, est envoyé à un dispositif (10) servant à adapter la cadence et à réaliser une conversion parallèle/série, et dans lequel, d'une part, la cadence des données est accrue en étant amenée à la cadence de transmission, moyennant la formation d'emplacements libres pour recevoir des bits de redondance et, d'autre part, un nombre correspondant de flux de données parallèles, qui forment respectivement pour moitié le canal I ou le canal Q est produit à partir du flux de données en série, que, respectivement, le bit de poids le plus faible des canaux I et Q, dans lesquels sont situés les emplacements de redondance, est envoyé, d'une part, directement et, d'autre part, et par l'intermédiaire d'un codeur (5,6), aux deux entrées du multiplexeur (3,4), dont le côté sortie est relié au modulateur en quadrature (2), et que les codeurs (5,6) observent respectivement un nombre déterminé de k bits arrivants et produisent, à partir de là, conformément à la prescription de codage d'un code subordonné, un ou plusieurs bits de redondance qui sont insérés à l'aide des multiplexeurs (3,4) en les emplacements prévus à cet effet dans le canal I ou le canal Q, et possèdent la structure d'un code de convolution auto-orthogonal modifié de cadence m/n élevée (par exemple $R_C = 8/9$), et dans lesquels les bits de données en série arrivants (bits de poids les plus faibles) sont convertis en un nombre correspondant de flux de données binaires, dont chacun est envoyé à un filtre FIR numérique binaire (18-25) (FIR = Finite Impulse Response), filtres dont les fonctions de transfert $H_i(D)$ sont identiques aux polynômes générateurs $G_i(D)$ (i = 1, 2, ..., m) (par exemple m = 8) du code utilisé et dont les sorties sont reliées entre elles par l'intermédiaire d'un additionneur modulo 2 (26), et que les bits de contrôle, qui apparaissent dans cet additionneur, sont envoyés à un filtre binaire numérique IIR (16) (IIR = Infinite Impulse Response), dont la fonction de transfert est $H_n(D) = 1/G_n(D)$ (par exemple n = 9), $G_n(D)$ étant un polynôme générateur.

2. Procédé suivant la revendication 1, caractérisé par le fait que dans le circuit du dispositif de décodage, les valeurs analogiques symboliques reçues sont quantifiées tout d'abord dans un dispositif de quantification (7) en des mots de données numériques (symboles) avec une fine résolution telle de la quantification qu'on dispose respectivement au moins d'un bit de décision logicielle pour les canaux I et Q, en dehors des bits de décision matérielle (bits de poids les plus faibles et bits de poids supérieur), que les symboles numériques des canaux I et Q sont respectivement retardés dans une mémoire tampon (8,9) et sont envoyés à un dispositif de correction (10,11), et que le bit de poids le plus faible parmi les bits de décision matérielle respectivement est envoyé, en supplément, à un décodeur (12,13) relié côté sortie au dispositif de correction et qui, en fonction de la précision de décodage du code subordonné, analyse une suite de bits successifs de poids les plus faibles, et, lors de l'identification d'un bit de poids le plus faible erroné à sa sortie, envoie une impulsion de correction au dispositif de correction (10,11), qui exécute alors une correction de l'erreur de transmission.

3. Procédé suivant la revendication 1 ou 2, caractérisé par le fait qu'aussi bien les symboles, dont le bit de poids le plus faible est un bit de données, que, en aval des filtres IIR utilisés dans les codeurs (5,6), les symboles, dont le bit de poids le plus faible est un bit de contrôle, utilisé par le multiplexeur (3,4), du code de convolution auto-orthogonal, peuvent être corrigés.

4. Procédé suivant l'une des revendications 1 à 3, caractérisé par le fait que le filtre IIR (16) est réalisé sous la forme d'un registre à décalage couplé par réaction.

5. Procédé suivant l'une des revendications 1 à 3, caractérisé par le fait que le filtre FIR et le filtre IIR (18-25; 16) sont rassemblés pour former un registre à décalage unique à prises, couplé par réaction.

6. Procédé suivant l'une des revendications 1 à 3, caractérisé par le fait que le décodeur (12,13) possède la structure d'un code de convolution auto-orthogonal modifié à cadence élevée m/n (par exemple $R_C$ = 8/9), que dans le décodeur les bits arrivants en série (bits de poids les plus faibles) sont constitués en des flux binaires parallèles qui correspondent au nombre des flux de données ainsi qu'aux flux de bits de contrôle dans le codeur (5,6), que chacun de ces flux binaire est envoyé à un filtre numérique binaire FIR (28-36), dont les fonctions de transmission $H_i(D)$ sont identiques aux polynômes générateurs $G_i(D)$ du code, auquel cas le flux de bits de contrôle reçu est également filtré par un filtre FIR, que les signaux de sortie du filtre sont réunis, par l'intermédiaire d'un additionneur modulo 2 (37), pour former un syndrome qui est introduit dans un registre de syndromes (38) qui comporte des prises en fonction des polynômes générateurs, que respectivement un nombre de prises, qui correspondent à un polynôme générateur, sont raccordées à des logiques majoritaires (32-47), dont le nombre correspondant à celui des filtres FIR (28,36) et qui forment les filtres, qui sont adaptés avec les prises correspondantes, pour les polynômes générateurs associés, et que les signaux de sortie des logiques majoritaires (39-47) sont réunis à l'aide d'un convertisseur parallèle/série (48) pour former un signal de sortie en tant que signal de correction.

7. Procédé suivant la revendication 1, caractérisé par le fait que les filtres FIR parallèles sont rassemblés pour former un registre à décalage possédant des prises correspondantes.

8. Procédé suivant la revendication 2, 6 ou 7, caractérisé par le fait qu'un ou plusieurs bits de décision logicielle sont envoyés aux décodeurs (12,13) en plus du bit de décision matérielle de poids le plus faible, et que ce qu'on appelle des logiques à seuil, qui utilisent également l'information de décision de logiciel pour le décodage des erreurs de transmission, sont utilisées dans le décodeur (12,13) à la place des logiques majoritaires (39-47).

9. Procédé suivant l'une des revendications précédentes, caractérisé par le fait qu'en plus du bit de décision matérielle de poids le plus faible, un ou deux bits de décision matérielle de poids supérieur sont insérés dans le codage et le décodage.

## FIG 1

## FIG 2

FIG 4

Serien/Parallel-Wandler 27

LSB

FIR-Filter 28

E1 → H₁ (D) 28

E2 → H₂ (D) 29

E8 → H₈ (D) 35

E9 → H₉ (D) 36

+ 37

S

Syndromregister 38

MJL1 39   MJL2 40   · · ·   MJL8 46   MJL9 47

Parallel / Serien - Wandler 48

Korrektursignal

EP 0 353 694 B1

# FIG 3